# EUROPEAN PATENT APPLICATION

(11) **EP 4 534 861 A1**
(43) Date of publication of application: **09.04.2025**
(21) Application number: 24202478.4
(22) Date of filing: 25.09.2024
(51) Int. Cl.: F16B 19/00, C09K 3/10, F16B 33/00

(54) **PRE-DOSED FASTENERS WITH INCORPORATED SEALANT DOSE FOR WET SEALANT APPLICATION AND METHOD**

(30) Priority: 03.10.2023 US 202318479921
(71) Applicant: The Boeing Company, Arlington, VA 22202 (US)
(72) Inventor: HARGRAVE, Benjamin Priest, Arlington, 22202 (US); PAJEL, Carissa Ann, Arlington, 22202 (US); MILLER, Melinda Dae, Arlington, 22202 (US); SIMS, JR, David Michael, Arlington, 22202 (US)
(74) Representative: Morrall, Jonathan Ian McLachlan

(57) **Abstract**

Fasteners pre-dosed with a curable sealant material encased within an at least partially-cured rupturable protective shell and methods are disclosed for the application of a selected curable sealant material dose to an aircraft assembly that is delivered simultaneously to an aircraft assembly location during fastener installation.

## Description

### TECHNOLOGICAL FIELD

The present disclosure relates generally to the field of sealants and sealing processes. More specifically, the present disclosure relates to the field of sealants and seals present at fastener/substrate interfaces.

### BACKGROUND

The manufacture of aircraft, including aircraft assemblies and sub-assemblies, can require the installation of a large number (e.g. totaling in the thousands or more, etc.) of fasteners that join components together, that join component segments together, and/or that join components, sub-assemblies, and/or assemblies to a larger structure, etc. Depending on the type of components into which fasteners are being installed, such fastener installation may be accompanied by the application of a sealant to the installation region to guard against corrosion and/or leakage in the region of the installed fastener.

Unless explicitly identified as such, no statement herein is admitted as prior art merely by its inclusion in the Technological Field and/or Background section.

### SUMMARY

A present example is directed to a fastener for use in an aircraft assembly, the fastener including a fastener exterior surface, a curable sealant material dose configured to coat a fastener exterior surface region of the fastener exterior surface, with the curable sealant material dose comprising a first chemical composition, and an at least partially-cured protective shell, with the at least partially-cured protective shell comprising the first chemical composition in an at least partially-cured state, with the at least partially-cured protective shell configured to substantially completely encase the curable sealant material dose within the at least partially-cured protective shell, and wherein the curable sealant material dose is preserved in an uncured state within the at least partially-cured protective shell.

In another example, the curable sealant material dose and the at least partially-cured protective shell comprise at least one of the first chemical composition, and a chemically compatible material.

In another example, the curable sealant material dose and the at least partially-cured protective shell comprise the same material.

In another example, the fastener is made from at least one of a metal, a thermoplastic material, a composite material, and combinations thereof.

In another example, the fastener further includes a curable sealant material/at least partially cured protective shell interface.

In another example, the curable sealant material dose and the at least partially-cured protective shell include a photo-curable sealant material.

In another example, the curable sealant material dose and the at least partially-cured protective shell include a UV-curable sealant material.

In another example, the curable sealant material dose includes a polysulfide-based sealant material and the at least partially-cured protective shell comprises a polysulfide-based sealant detackifier.

In another example, the curable sealant material dose includes a UV-curable sealant material in an uncured state and the at least partially-cured protective shell includes the UV-curable sealant material in a partially-cured state.

In another example, the fastener further includes a UV-curable sealant material/at least partially-UV-cured material protective shell interface.

In a further example, the curable sealant material dose includes an average thickness ranging from about 1/8 inch to about 1/4 inch.

In another example, the at least partially-cured protective shell comprises an average thickness ranging from about 1 mm to about 2 mm.

In another example, the at least partially-cured protective shell is configured to rupture at an applied pressure ranging from about 240 psi to about 400 psi.

In another example, the at least partially-cured protective shell is configured to rupture at an applied pressure ranging from about 275 psi to about 365 psi.

In another example, the at least partially-cured protective shell is configured to rupture at an applied pressure ranging from about 275 psi to about 400 psi.

A further present example is directed to an aircraft pre-assembly including a substrate, with the substrate including a plurality of components, and with the plurality of components configured to receive a curable sealant material-dosed fastener to join the plurality of components in a fastener installation operation, and to form an installed fastener. The aircraft pre-assembly further includes an installed curable sealant material-dosed fastener, with the installed curable sealant material-dosed fastener dimensioned to join the plurality of components. The installed curable sealant material-dosed fastener includes a released curable sealant material dose including a first chemically-based composition, with the released curable sealant material dose released from a ruptured at least partially-cured protective shell, with the ruptured at least partially-cured protective shell configured to rupture substantially simultaneously during installation of the installed fastener into the aircraft pre-assembly, and with the at least partially-cured ruptured protective shell configured to release the curable sealant material dose from the at least partially-cured ruptured protective shell during installation of the installed fastener into the aircraft pre-assembly. The ruptured at least partially-cured protective shell includes at least one of the first chemically-based composition and a chemical composition compatible with the first chemically-based composition.

In another example, the curable sealant material dose comprises a polysulfide-based sealant material and the at least partially-cured sealant material protective shell comprises a polysulfide-based sealant detackifier.

In another example, the curable sealant material dose comprises a first UV-curable sealant material in an uncured state and the at least partially-cured protective shell comprises a layer of the first UV-curable sealant material in an at least partially-cured state.

In another example, ruptured at least partially-cured protective shell is configured to rupture during installation of the installed curable sealant material-dosed fastener at an applied pressure ranging from about 275 psi to about 400 psi.

Another present example is directed to a method for making a fastener for an aircraft assembly, with the method including applying a curable sealant material dose to a fastener exterior region of a fastener and forming a curable sealant material-dosed fastener, with the curable sealant material-dosed fastener comprising a curable sealant material-dosed fastener exterior region. The method further includes forming an at least partially-cured protective shell configured to encase the curable sealant material dose at the curable sealant material-dosed fastener exterior region.

In another example, a method includes the examples of method and further includes coating the curable sealant material-dosed fastener exterior region with a sealant detackifier material layer, with the at least partially-cured protective shell comprising the sealant detackifier material layer.

In another example, the curable sealant material dose comprises a polysulfide-based material and the detackifier material layer comprises a polysulfide-based material.

In another example, the curable sealant material dose comprises a UV-curable material.

In another example, a method includes the examples of method and further includes at least partially-curing a curable sealant material dose outer region of the UV curable material to form the at least partially-cured protective shell.

A further present example is directed to a fastener made according to a method including applying a curable sealant material dose to a fastener exterior region of a fastener and forming a curable sealant material-dosed fastener, with the curable sealant material-dosed fastener comprising a curable sealant material-dosed fastener exterior region. The method further includes forming an at least partially-cured protective shell configured to encase the curable sealant material dose at the curable sealant material-dosed fastener exterior region.

A further present example is directed to at least one of an aircraft assembly and an aircraft pre-assembly that includes a fastener made according to a method including applying a curable sealant material dose to a fastener exterior region of a fastener and forming a curable sealant material-dosed fastener, with the curable sealant material-dosed fastener comprising a curable sealant material-dosed fastener exterior region. The method further includes forming an at least partially-cured protective shell configured to encase the curable sealant material dose at the curable sealant material-dosed fastener exterior region.

A further present example is directed to an aircraft including a fastener made according to a method including applying a curable sealant material dose to a fastener exterior region of a fastener and forming a curable sealant material-dosed fastener, with the curable sealant material-dosed fastener comprising a curable sealant material-dosed fastener exterior region. The method further includes forming an at least partially-cured protective shell configured to encase the curable sealant material dose at the curable sealant material-dosed fastener exterior region.

Another present example is directed to a method for assembling an aircraft assembly, with the method including providing a plurality of components, with the plurality of components configured to receive an installed fastener to join the plurality of components, and providing a fastener configured to join the plurality of components. The fastener includes a fastener exterior surface including a curable sealant material dose, with the curable sealant material dose including an at least partially-cured protective shell configured to completely encase the curable sealant material dose in an uncured state. The method further includes installing the fastener to join the plurality of components; and, substantially simultaneously with the installing of the fastener, rupturing the at least partially-cured protective shell during installing the fastener to form a ruptured protective shell. The method further includes releasing at least a portion of the curable sealant material dose from the ruptured protective shell to form a released curable sealant material dose, and curing the released curable sealant material dose to form the aircraft assembly, wherein the curable sealant material dose and the at least partially-cured protective shell comprise a common chemical compound.

Another present example is directed to an aircraft assembly made according to a method including providing a plurality of components, with the plurality of components configured to receive an installed fastener to join the plurality of components, and providing a fastener configured to join the plurality of components. The fastener includes a fastener exterior surface including a curable sealant material dose, with the curable sealant material dose including an at least partially-cured protective shell configured to completely encase the curable sealant material dose in an uncured state. The method further includes installing the fastener to join the plurality of components; and, substantially simultaneously with the installing of the fastener, rupturing the at least partially-cured protective shell during installing the fastener to form a ruptured at least partially-cured protective shell. The method further includes releasing at least a portion of the curable sealant material dose from the at least partially-cured ruptured protective shell to form a released curable sealant material dose, and curing the released curable sealant material dose to form the aircraft assembly, wherein the curable sealant material dose and the at least partially-cured protective shell comprise at least one of the same chemically-based composition and a compatible chemically-based composition.

Another present example is directed to an aircraft including the aircraft assembly made according to method including providing a plurality of components, with the plurality of components configured to receive an installed fastener to join the plurality of components, and providing a fastener configured to join the plurality of components. The fastener includes a fastener exterior surface including a curable sealant material dose, with the curable sealant material dose including an at least partially-cured protective shell configured to completely encase the curable sealant material dose in an uncured state. The method further includes installing the fastener to join the plurality of components; and, substantially simultaneously with the installing of the fastener, rupturing the at least partially-cured protective shell during installing the fastener to form a ruptured at least partially-cured protective shell. The method further includes releasing at least a portion of the curable sealant material dose from the ruptured at least partially-cured protective shell to form a released curable sealant material dose, and curing the released curable sealant material dose to form the aircraft assembly, wherein the curable sealant material dose and the at least partially-cured protective shell comprise at least one of the same chemically-based composition and a compatible chemically-based composition.

The features, functions and advantages that have been discussed can be achieved independently in various examples or may be combined in yet other examples, further details of which can be seen with reference to the following description and the drawings.

### BRIEF DESCRIPTION OF THE DRAWINGS

Having thus described variations of the disclosure in general terms, reference will now be made to the accompanying drawings, which are not necessarily drawn to scale, and wherein:
FIG. 1 is an illustration of a vehicle in the form of an aircraft, according to present aspects;
FIG. 2 is a side view, not necessarily drawn to scale, of a fastener, according to present aspects;
FIG. 3A is a perspective view of a fastener including an applied curable sealant material dose, according to present aspects;
FIG. 3B is a perspective view of a fastener that can be of the type shown in FIG. 3A further including a layer of curable material that can be at least partially-cured to become a protective shell layer, according to present aspects;
FIG. 3C is a perspective view of a fastener that can be of the type shown in FIGs. 3A and/or FIG. 3B, according to present aspects;
FIG. 3D is a cross-sectional view of the fastener that can be of the type shown in FIG. 3C, according to present aspects;
FIG. 4A is a perspective view of an aircraft pre-assembly including substrate components, according to present aspects;
FIG. 4B is a perspective view of an aircraft pre-assembly including substrate components with a fastener installed, according to present aspects;
FIG. 5 is a flowchart outlining a method according to present aspects;
FIG. 6 is a flowchart outlining a method according to present aspects;
FIG. 7 is a flowchart outlining a method according to present aspects;
FIG. 8 is a flowchart outlining a method according to present aspects; and
FIG. 9 is a flowchart outlining a method according to present aspects.

### DETAILED DESCRIPTION

Sealant application for a large number (e.g., thousands or more) of fasteners installed on an aircraft is time-consuming and costly, at least in terms of man-hours, labor, materials, inspection of fastener installation sites, etc. In addition, sealant materials may have a pot life that requires application to occur before the sealant cures, or begins to cure. Consequently, manufacturing time and/or delay with respect to fastener installation can result in significant amount of sealant material waste that further contributes to increased cost. In addition, sealant application at fastener sites in aircraft manufacture can require transporting a sealant to a "point-of-use" that can be impacted by space constraints, including, for example, confined spaces that can include, for example, fuel tanks, etc.

In addition, properly applying amounts of sealant to fastener sites in aircraft assemblies, sub-assemblies, etc., can be an imprecise endeavor that can result in either or both of an inadequate amount at various fastener sites and/or a surplus of sealant that must be wiped or otherwise removed from assembly and/or sub-assembly surfaces, before the applied sealant cures.

In addition, applying wet sealant to fastener sites, for example, during aircraft manufacture can further result in the introduction of foreign object debris (FOD) that can settle onto or into a batch of wet sealant before or as it is applied to an assembly, settle onto or into a fastener installation site, or settle into a sealant during preparation of the sealant batch, etc.

Present aspects are directed to and address these and other issues that can complicate and/or exacerbate applying sealants, including applying sealants to fastened areas during aircraft manufacture.

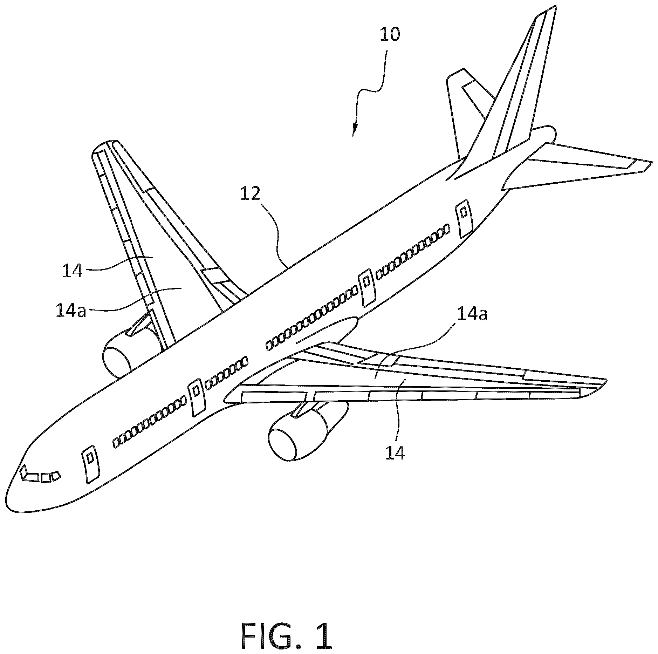

FIG. 1 shows a vehicle in the form of an aircraft 10 having a fuselage 12 to which is attached wings 14 having internally-located fuel tanks 14a within the aircraft wings 14.

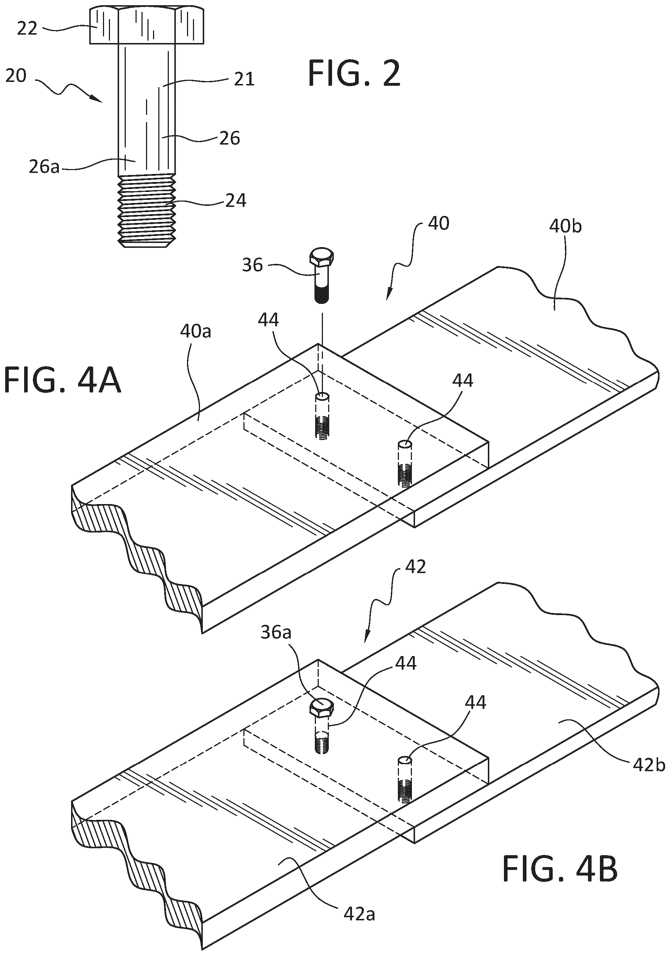

FIG 2 is an illustration of a side view of a fastener 20 in the form of a bolt, although present aspects contemplate fasteners of nearly any type benefitting from the sealant delivery aspects set forth herein, with contemplated fasteners including, for example, screws, rivets, etc. Fastener 20 shown in FIG. 2 includes fastener head 22 with shank section 26 extending from the underside of fastener head 22 to a threaded section 24. Shank section 26 further is shown including fastener exterior surface region 26a. While the fastener shown in FIG. 2 and described herein can include modification to the fastener exterior section that is primarily located on the shank of the fastener (when the fastener is, for example, a bolt), present aspects further contemplate the modification of a fastener exterior surface also extending into a threaded section, extending to and/or over a fastener head, although such aspects may not be explicitly shown in the FIGs.

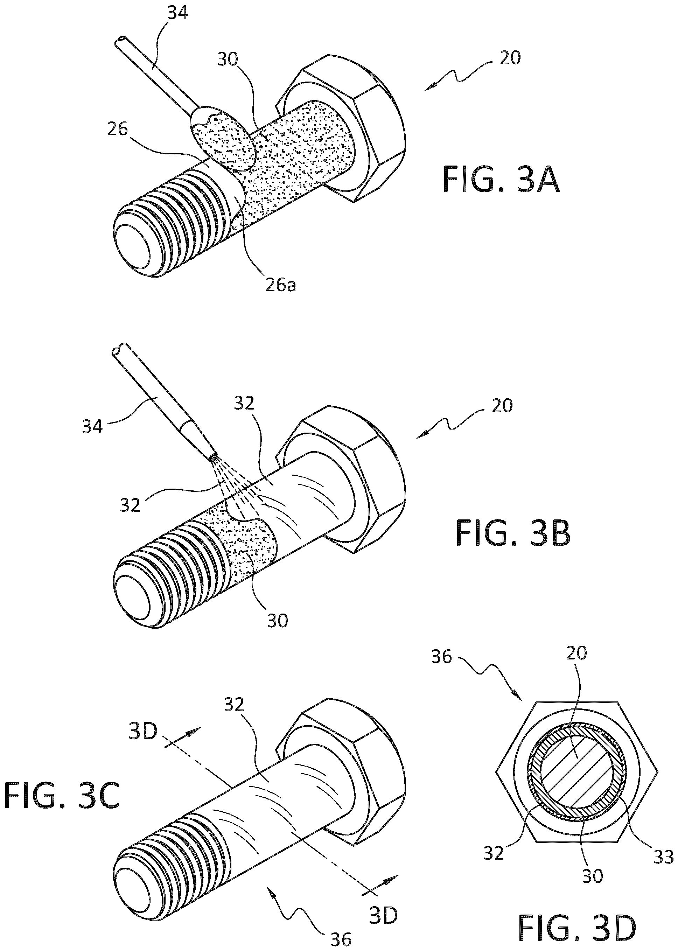

FIGs. 3A, 3B, and 3C show a progression of fastener treatment and alternate fastener treatments, according to present aspects, that modify a typical fastener of the type used in aircraft manufacture into a treated fastener (referred to herein equivalently as a "pre-dosed fastener") that can greatly simplify wet sealing processes and that can eliminate or obviate wet sealant application procedures (and, e.g., multiple steps in wet sealant application and clean-up procedures, etc.) that can result is significant time savings and cost savings, at least in terms of man-hours, material cost, rework time, clean-up, maintenance time, as well as a significant reduction in manufacturing time, and/or a significant reduction in the amount of time an aircraft may be out-of-service for rework that requires applying sealant, etc.

The significant time savings and cost savings afforded by the present aspects, are in addition to the present aspects' significant improvement in increasing overall production flow by delivering a "right-sized" amount of wet sealant material dose delivered for a particular sealing use at a particular sealing location in the manufacture of, for example, aircraft, in a process that delivers the "right-sized sealant dose substantially simultaneously with the installation of a pre-dosed fastener.

The delivery of a selected "right-sized" wet sealant material dose simultaneously with pre-dosed fastener installation obviates the problem of not providing enough sealant to an area or region to be sealed that could result in an inferior or inadequate seal that could cause re-sealing result in added production cost. In addition, the delivery of a selected "right-sized" wet sealant material dose obviates the problem of delivering an excess amount of sealant to an area or region to be sealed that can result in significant material (sealant) waste that must be removed, and further resulting in additional production cost, time, etc.

According to present aspects, before a fastener is installed in an assembly or sub-assembly that may require wet sealant application (and that previously, typically, required separate steps for wet sealant application before, during, and/or after fastener installation, etc.), a fastener is pre-treated (referred to equivalent herein as "pre-dosed") with a selected amount of wet sealant (that is both curable and that is configured to remain in an uncured state until actual installation), to form a fastener that contains a right-sized amount or selected "dose" of wet sealant in an uncured state and that is preserved in an uncured state, that is maintained in position on a pre-dosed fastener and that is not released from the fastener until the pre-treated fastener is installed into position in a sub-assembly, assembly, etc. That is, according to present aspects, a fastener is treated to function as both a fastener and as a controlled delivery device for a selected dose of uncured wet sealant at the time and location of an actual fastener installation.

As shown in FIG. 3A, fastener 20 of the type shown in FIG. 2, (but with fastener 20 representing any fastener type to include, for example, a screw, a rivet, etc.) is shown having a curable sealant material dose 30 applied to a fastener exterior surface region 26a of fastener 20. The curable sealant material dose can be a wet sealant suitable for wet sealant applications and can be applied to fastener by application methods that can include spraying, brushing, dipping, etc., with FIG. 3A showing applicator 34 used to apply the curable sealant material dose to the fastener exterior surface region 26a.

FIG. 3B illustrates a present aspect, with the curable wet sealant material coating, or pre-measured "dose" being treated with a material that, when at least partially cured becomes the at least partially-cured protective shell that is configured to maintain the underlying curable sealant material dose in an uncured state, and/or "wet" sealant state that is not cured (e.g., that remains uncured beneath the at least partially-cured protective shell, etc.).

According to one present example, depending on the end-use demands and characteristics of the wet sealant, if a curable polysulfide-based wet sealant material is selected, the selected protective shell material will be selected to have a high degree of chemically-based compatibility with the underlying wet sealant. Returning to this example, when the selected curable sealant material dose comprises, for example, a polysulfide-based curable sealant material dose, the selected protective shell material will be a polysulfide-based material that can be, for example, a polysulfide-based tackifier layer that can cure in ambient conditions, and that will maintain the underlying curable sealant material dose as a "wet" and uncured sealant material beneath the at least partially-cured protective shell, until the protective shell is ruptured at the point of fastener installation; the point at which the wet polysulfide sealant is released from the ruptured protective shell to a surface to be sealed by the wet sealant material.

Once the "wet" and uncured sealant material is released from the at least partially-cured ruptured protective shell during and coincident with fastener installation, the wet sealant can begin to undergo its curing regimen that may be a cure under ambient conditions (ambient pressure, ambient temperature, etc.)/ or, in the case of selecting a UV-curable sealant, the released wet UV-curable sealant can be subjected to (e.g., exposed to, etc.) a UV-curing regimen to cure the released UV-curable wet sealant.

FIG. 3B shows the fastener 20 of the type shown in FIG. 3A that now includes the curable sealant material dose being coated with an applied layer of a material that will form the at least partially-cured protective shell. According to present aspects, the at-least partially-cured protective shell material is a material that is at least chemically compatible with the sealant material. That is, the sealant material and the protective shell material can share a common chemically-based composition, can be from the same chemical compound family, can possess compatible chemistries, etc.

When the protective shell material is at least partially-cured (e.g., the protective shell material at least partially cures, in place, over the curable sealant material dose), the applied protective shell material is configured to form an at least partially-cured protective shell 32 that will maintain the underlying curable sealant material dose as a "wet" and uncured sealant material beneath the at least partially cured protective shell. As shown in FIG. 3B the protective shell material can be applied to the curable sealant material dose by a method that can include, for example, spraying, and that can include other selected material deposition methods.

FIG. 3C shows the fastener 20 of FIGs. 3A, 3B that has now been coated with both a curable sealant material dose 30 that, in turn, has been coated with the at least partially-cured protective shell material to form a sealant-dosed fastener 36 having the at least partially-cured protective shell 32 covering, protecting, and maintaining the curable sealant material dose 30 (not shown in FIG. 3C) in a "wet" and uncured state.

FIG. 3D is a cross-sectional view of the sealant-dosed fastener 36 that can be of the type shown in FIG. 3C taken along line 3D-3D. As shown in FIG. 3D, sealant-dosed fastener 36 comprises fastener 20 (the uncoated fastener) comprising the curable sealant material dose 30 coating the fastener 20, and with the at least partially-cured protective shell 32 covering, encasing (e.g., coating) the curable sealant material dose 30 at the curable sealant material dose/at least partially-cured protective shell interface 33.

In an alternate aspect, returning to FIG. 3A, depending on the end use demands and characteristics of the wet sealant, if a photo-curable sealant that can be, for example, a UV-curable wet sealant is selected, the selected protective shell can be formed without applying a separate material to the curable sealant material dose. That is, according to this present example, when the curable sealant material dose is a UV-curable sealant material dose, the UV-curable sealant material can be subjected to an initial and brief UV-curing regimen selected to cure only the surface of the UV-curable sealant material dose to form an at least partially-cured protective shell of a selected thickness (at the exterior and/or exposed surface of the UV-curable sealant material dose), while leaving remainder of the UV-curable sealant material dose in a wet and uncured state that is "protected" by the protective shell. In this example, the at least partially UV-cured protective shell and the uncured underlying UV-curable sealant material dose can be the same UV-curable material.

In this example, after formation of the UV-cured protective shell, a sealant-dosed fastener 36 having the at least partially-UV-cured protective shell will be formed. In this example, the step of separately applying an additional chemically compatible material to cover, or encase, the wet sealant material can be obviated, and or replaced by the initial UV-curing step of the outer surface only of the UV-curable wet sealant material dose. FIGs. 3A, 3C and 3D apply also to this example where, as shown in FIG. 3D, sealant-dosed fastener 36 comprises fastener 20 (the uncoated fastener) comprising the curable sealant material dose 30 (that can be a UV-curable sealant material dose) coating the fastener 20, and with the at least partially-cured protective shell 32 covering, encasing (e.g., coating) the UV- curable sealant material dose 30 at the curable sealant material dose/at least partially-cured protective shell interface 33. Again, in this example where, an initial, at least partial UV-cure of the outer surface of the UV-curable sealant material is conducted, the at least partially-UV-cured protective shell and the remaining uncured UV-curable wet sealant material can be the same UV-curable material, with the protective shell formed from an outer or exterior surface of the UV-curable wet sealant dose.

Selected UV-curable sealant materials can be, for example, acrylic-based materials, that can be applied as the sealant dose to the fastener exterior surface region of the fastener in a selected amount, such that the average thickness of the sealant dose can range from about 1/8 inch to about 1/4 inch. When the exterior surface of the UV-curable sealant material dose is subjected to an initial UV-curing regimen to form the at least partially-cured UV-cured protective shell, a selected at least partially-UV-cured protective shell thickness of up to about 1 mm to about 2 mm can be achieved with a controlled UV-curing regimen having, for example, an elapsed UV-curing time ranging from about 5 seconds to about 10 seconds. The UV-curing regimen and the UV-curable sealant material can be selected to both produce the selected protective shell thickness, while leaving the remainder of the UV-curable sealant material dose uncured, and in a "wet" and uncured state, and with the uncured sealant material dose effectively encapsulated, encased, etc., within the protective shell.

The term "encapsulation", as used herein, means that the entirety of the outer regions of the uncured curable sealant material dose are surrounded entirely, or completely by the protective shell, and in, for example, a leakproof configuration. Present aspects recognize that, after formation of the protective shell, the wet UV-curable sealant material contained within (e.g., encapsulated within) the protective shell is curable, but remains uncured, with the uncured sealant material dose bounded by the protective shell and further bounded by the fastener exterior surface region.

FIGs. 4A and 4B show an installation progression, according to present aspects, where a sealant-dosed fastener 36 is presented to and installed into a pre-assembly (an unfastened pre-assembly, for example) to form a fastened assembly. FIG. 4A shows an aircraft pre-assembly 40 comprising substrate components 40a, 40b to be joined together at fastening sites 44 by sealant-dosed fastener 36. As shown in FIGs. 4A and 4B fastening sites 44 are configured to extend through substrate components 40a, 40b that are aligned with one another such that aligned fastening sites 44 are configured to receive sealant-dosed fastener 36 therethrough to join and fasten substrate components 40a and 40b together and to one another.

Fastening sites 44, as shown in FIGs. 4A and 4B are through openings (e.g., "holes") that can each have a close tolerance with an inserted fastener, and that can have small or interstitial spaces between the inserted fastener and the fastener site (e.g., fastener site cavity walls, etc.) Depending upon the location of the joined substrate, it may be desired to have the fastening site be made leakproof, and otherwise require a sealant application to the fastening site to render the fastening site as "leakproof'.

As shown in FIG. 4B, a sealant-dosed fastener 36 has been inserted into and has been otherwise installed into fastening site 44 to form joined aircraft assembly 42 comprising first assembly component 42a joined to second assembly component 42b. According to present aspects, coincident and/or substantially coincident with the act of installing the sealant-dosed fastener 36 into fastening site 44, the force on the sealant-dosed fastener 36 that is created by inserting the sealant-dosed fastener 36 into fastening site 44 ruptures, and/or otherwise breaks the at least partially-cured protective shell 32 housing the uncured sealant dose, with the uncured and curable sealant material dose released from the protective shell (e.g., the now ruptured protective shell) with the released curable wet sealant occupying locations that can be interstitial locations previously existing between the fastener exterior surface and the fastening site.

According to present aspects, the pressure presented to the sealant-dosed fastener during installation is selected to be the pressure needed to rupture the at least partially-cured protective shell. In one example, when the average thickness of the at least partially-cured protective shell ranges from about 1 mm to about 2mm, the force on the protective shell and that is adequate to rupture the protective shell can range from about 240 psi to about 400 psi. In another example, the at least partially-cured protective shell is configured to rupture at an applied pressure ranging from about 275 psi to about 400 psi. In another example, the at least partially-cured protective shell is configured to rupture at an applied pressure ranging from about 275 psi to about 365 psi.

Without being bound to any theory, the force applied to the present sealant-dosed fasteners during installation can create inward pressure on the protective shell. In addition, as pressure within the protective shell builds, an elastic force of the uncured wet sealant within the protective shell may exert an outward force with outward pressure on the protective shell from within the location of the wet sealant contents within the protective shell. Regardless of the inward, outward, or a combination thereof of pressure exerted on the protective shell, the stated pressure ranges stated herein are achieved by and caused coincident with the installation process of the fastener into an assembly fastening site. In addition, according to present aspects, the forces/pressures needed to rupture the protective shell are beyond the forces normally encountered by the sealant-dosed fasteners in handling, shipping, storage, etc. According to present aspects, the protective shell of the curable sealant material-dosed fasteners can be selected to be robust enough to allow such fasteners to be sed in automated installation procedures (e.g., robotic-assisted assemblies, etc.) where such fasteners may be "picked", placed, inserted, and otherwise machine-handled during such automation. The present wet-sealant dosed fasteners can allow and facilitate both assembly fabrication through automated fastener installation, and also allow automated sealing capabilities that would significantly and advantageously increase opportunities for automated sealant application in areas having dimension restrictions or that may otherwise be located regions that could be difficult or impossible to access by a human worker including, for example, aircraft fuel tanks, etc.

Upon release from the protective shell, a selected curable sealant material can begin to ambiently cure according to a selected sealant cure regimen. In another aspect, upon release of a UV-curable sealant material from the protective shell, UV light can be directed to the fastening site to UV-cure the released UV-curable sealant material. FIG. 4B further shows installed fastener 36a in place in the fastening site 44, and joining substrate components in the form of first assembly component 42a and second assembly component 42b, with curable sealant material now released from ruptured protective shell into locations (e.g., "spaces") within the fastening site 44 to be sealed by the released sealant upon curing of the released curable sealant material.

By pre-dosing fasteners with a selected and protected right-sized "dose" of curable wet (and uncured) sealant material, many sealant application advantages are realized. According to present aspects, the term "dose" means a selected and/or measured quantity and/or amount, and that can be measured according to volume or mass, with the selected curable sealant material dose selected to produce a desired and selected seal (upon curing) and otherwise accomplish a selected sealing operation of spaces, voids, surfaces, etc., of a component of an assembly that can be, for example, an aircraft assembly in an aircraft.

As stated herein, pre-dosing fasteners with selected amounts of curable sealant material can obviate sealant application steps that previously were conducted as separate fastener installation/sealing steps and operations. By providing the present pre-dosed fasteners according to present aspects, no amounts of separate sealant materials are required to conduct and/or complete sealing operation, as the amount of sealant required for a selected sealing operation is entirely provided by the sealant dose contained within the protective shell of the pre-dosed fastener.

In addition, previous challenges that existed in a manufacturing environment with respect to foreign object debris (FOD) contaminating a batch of sealant material, or contaminating a location to be sealed are significantly minimized or eliminated, as the sealant material applied to a structural location (e.g., in a sub-assembly, assembly, etc., in a manufacturing setting) is not exposed to a manufacturing environment before it is applied to the selected sealing location. That is, according to present aspects, sealant material is kept sequestered and otherwise protected from a manufacturing environment until the protective shell on the present pre-dosed fastener releases sealant material from the ruptured protective shell during the precise moment of actual fastener installation at the precise location within a fastener assembly where sealant delivery is needed.

In addition, according to present aspects, the selection of a curable sealant material dose and an at least partially-cured protective shell material having the same chemically-based composition, similar chemically-based composition, or compatible chemically-based composition further guards against the formation of, accumulation of, entry of FOD that could otherwise result from dissimilar chemically-based materials contaminating a released sealant material dose from the protective shell encapsulation. That is, according to present aspects, once a curable sealant material dose is released from a ruptured protective shell, fragments of the protective shell can permissibly inhabit the released curable sealant material dose at an area to be sealed, without adversely impacting or otherwise interfering with the quality of the eventual final seal, as, for example, the released curable sealant material dose is cured. Without being bound by any particular theory, it is believed that the compatible or identical chemistry selection of the shell and the curable dose results in an absorption, and/or an assimilation of the at least partially-cured ruptured protective shell fragments into the sealant material dose, as both the at least partially-cured ruptured shell fragments and the curable (but uncured) dose that is released from the ruptured protective shell are both subjected to further and final curing that can be ambient curing, UV-curing, etc.

According to present aspects, the pre-dosed fastener can be made from at least one of a metal, a thermoplastic material, a composite material, and combinations thereof with the understanding that the curable sealant material dose that contacts the fastener exterior surface within will not adversely impact the fastener material.

According to further present aspects, and as explained herein, the curable sealant material dose and the at least partially-cured protective shell can be made from the same or different material(s). When the curable sealant material dose and the at least partially-cured protective shell are made from a different material, according to present aspects, the curable sealant material dose and the at least partially-cured protective shell will share a common chemistry where the uncured wet sealant that is the curable sealant material dose and the at least partially-cured protective shell comprise a similar and compatible chemistry, or have the same chemistry (e.g., comprising the same chemical compound "class" or comprising the same chemical compound, composition, etc.).

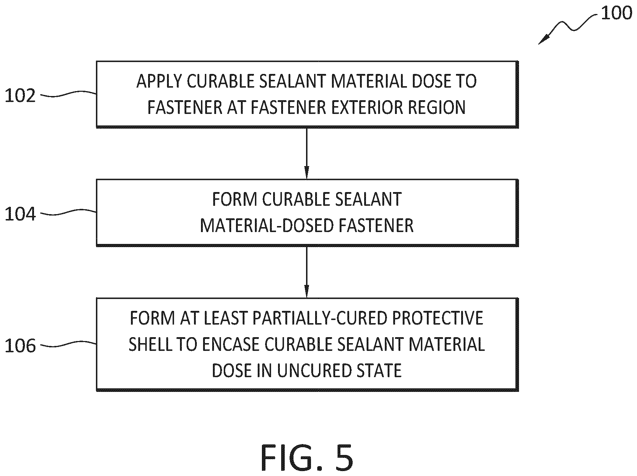

FIGs. 5, 6, 7, 8, and 9 are flowcharts outlining methods according to present aspects.

FIG. 5 outlines a method 100, according to present aspects, with method 100 including applying 102 a curable sealant material dose to a fastener at a fastener exterior region, and forming 104 a curable sealant material-dosed fastener. Method 100 further includes forming an at least partially-cured protective shell at the curable sealant material dose/at least partially-cured protective shell interface to completely encase (referred to equivalently herein as "encapsulating") the curable sealant material dose within the at least partially-cured protective shell at the curable sealant material dose/at least partially-cured protective shell interface. According to method 100, the curable sealant material dose and the at least partially-cured protective shell comprise a material having a common chemistry, as explained herein.

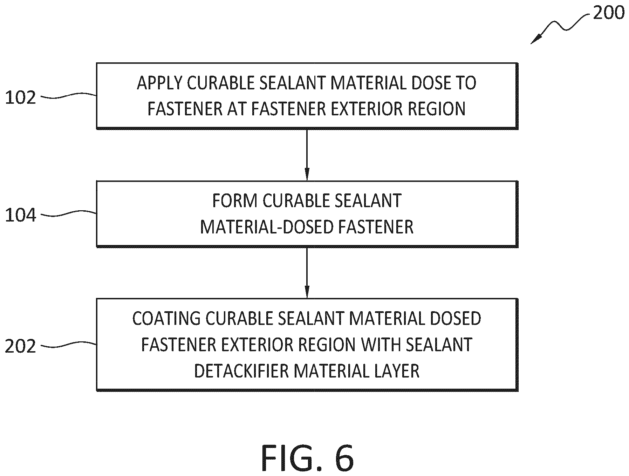

When it is desired to provide a polysulfide curable sealant as the sealant to a substrate (e.g., an aircraft pre-assembly, an aircraft assembly, etc.), as set forth herein, a curable polysulfide sealant can be used as the "dose" to coat the fastener. Accordingly, FIG. 6 outlines a method 200, according to present aspects, with method 200 including applying 102 a curable sealant material dose that can be a curable polysulfide sealant material to a fastener at a fastener exterior region, and forming 104 a curable sealant material-dosed fastener. Method 200 further includes coating 202 the curable sealant material of the curable sealant material-dosed fastener with a sealant material detackifier that can be, for example, a polysulfide sealant detackifier material layer that forms the at least partially-cured protective shell.

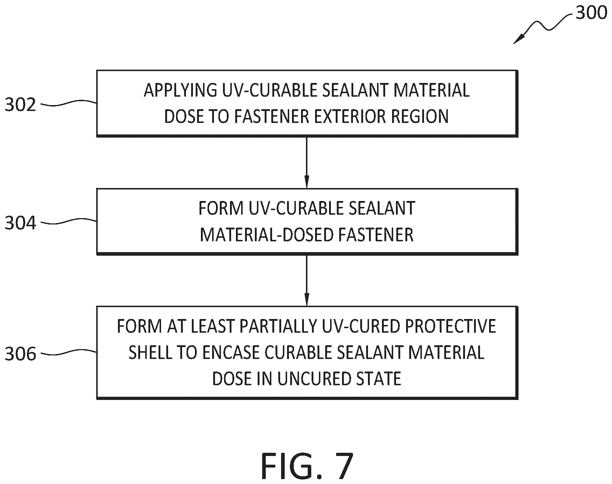

FIG. 7 outlines a method 300 including applying 302 a UV-curable sealant material dose to a fastener exterior region and forming 304 a UV-curable sealant material-dosed fastener. Method 300 further includes forming 306 at an at least partially-UV-cured protective shell by, for example, subjecting the outer surface of the UV-curable sealant material dose to a brief UV curing regimen to form the at least partially-UV-cured protective shell, for example, having a thickness ranging from about 1 mm to about 2 mm, while maintaining the remainder of the UV-curable sealant material in a "wet" and uncured state within the UV-cured protective shell.

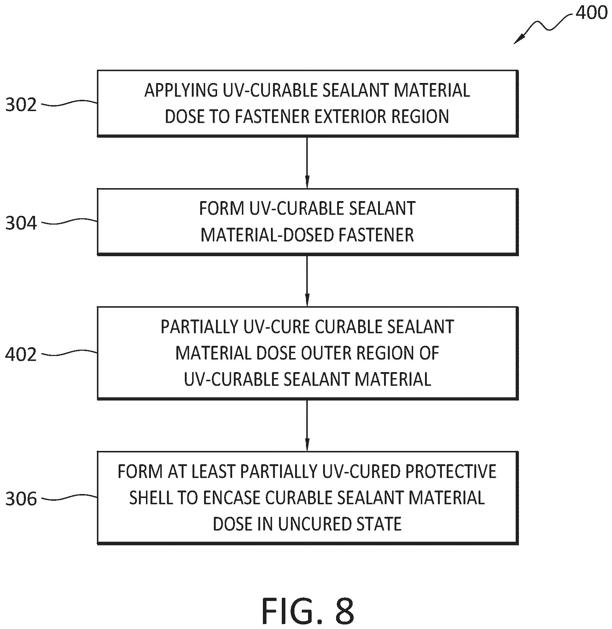

FIG. 8 outlines a method 400 that includes the method 300 shown in FIG. 7 and further includes at least partially UV-curing 402 the curable sealant material dose outer region of the UV-curable sealant material dose to form the at least partially-UV-cured protective shell.

The terms "at least partially-cured" and "at least partially-UV-cured" refer to a state of curing where the curing material is not allowed to proceed in a curing regiment to the point where the material has undergone a nearly complete or complete polymerization as evidenced by a nearly complete or complete degree of cross-linking. According to present aspects, the degree of the "partial curing" of the protective shell is selected to be enough to allow the pre-dosed fasteners (e.g., the fasteners comprising the curable sealant material dose with the protective shell formed) that comprise a protective shell, to be handled and manipulated (including packaging, shipping, storing, etc.), and positioned for installation without the handling resulting in, or otherwise risking, the rupture of the protective shell.

Present aspects recognize that complete curing of the protective shell, whether UV-curing or ambient-curing (at, for example, ambient/room temperatures and temperature ranges, etc.) may not be required or desired for the present purposes of facilitating sealant application by preparing and installing a sealant-dosed fastener. Indeed, as set forth herein, the inward force during fastener installation on the at least partially-cured protective shell must be adequate to rupture the protective shell such that installation of the fastener and rupturing of the protective shell occur coincidentally and/or substantially simultaneously. That is, over-curing or completely curing a UV-curable material could present a protective shell that is robust enough to prevent the proper release of the curable sealant material dose, and is to be avoided.

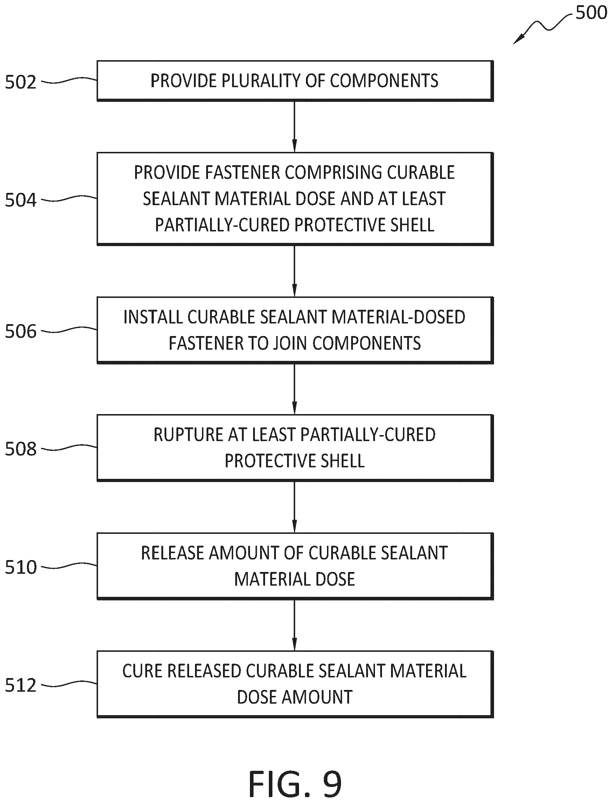

FIG. 9 is a flowchart outlining a method 500 for assembling an aircraft assembly, with the method 500 including providing 502 a plurality of component to be joined, for example, into a sub-assembly, an assembly, etc., and providing 504 a sealant-dosed fastener comprising a curable sealant material dose and an at least partially-cured protective shell configured to retain the curable sealant material dose in an uncured state within the protective shell of the sealant-dosed fastener. Method 500 further includes installing 506 the curable sealant material-dosed fastener, for example, into an assembly, sub-assembly, etc., to join the plurality of components and substantially simultaneously rupturing 508 the at least partially-cured protective shell and substantially simultaneously releasing 510 an amount of the curable sealant material dose from the ruptured protective shell into the joined components and curing 512 the released curable sealant material dose.

According to present aspects, the methods outlined in FIGs. 5, 6, 7, 8, and 9 can employ the pre-dosed fasteners of the type shown in at least FIG. 3C and 3D, and that can be installed in the assemblies shown at least in FIGs. 4A and 4B, with such assemblies being installed into vehicles including aircraft of the type shown at least in FIG. 1.

The term "substantially" as used herein means that a particular characteristic, parameter, or value does not need to be exactly achieved. Rather, deviations or variations, including, for example, tolerances, measurement error, measurement accuracy limitations, and other factors known to those skilled in the field, may occur in amounts that do not preclude the effect that the characteristic was intended to provide.

The term "substantially simultaneously" as used herein means that a particular event occurs "coincidently" with another event, or "substantially coincidently" with another event with two events occurring together in real time, or at least occurring very closely together in time. The present aspects may, of course, be carried out in other ways than those specifically set forth herein without departing from essential characteristics of the present disclosure. The present aspects are to be considered in all respects as illustrative and not restrictive, and all changes coming within the meaning and equivalency range of the appended claims are intended to be embraced therein.

## Claims

1. A fastener (40) for use in the manufacture of an aircraft assembly (41), the fastener (40) comprising:
a fastener exterior surface (21) comprising a fastener exterior surface region (26a);
a curable sealant material dose (30) configured to coat at least a portion of fastener exterior surface region (26a);
an at least partially-cured protective shell (32), said at least partially-cured protective shell comprising the first chemical composition in an at least partially-cured state, said at least partially-cured protective shell configured to substantially completely encase the curable sealant material dose (30) within the at least partially-cured protective shell (32);
wherein said curable sealant material dose (30) is preserved in an uncured state within the at least partially-cured protective shell (32); and
wherein the curable sealant material dose and the at least partially-cured protective shell comprise at least one of the same material and a chemically compatible material.

2. The fastener of Claim 1, wherein the fastener is made from at least one of a metal, a thermoplastic material, a composite material, and combinations thereof.

3. The fastener of Claim 1 or 2, further comprising a curable sealant material/at least partially cured protective shell interface (33).

4. The fastener of any preceding Claim, wherein the curable sealant material dose and the at least partially protective shell comprise a curable material.

5. The fastener of Claim 4, wherein the curable sealant material dose comprises a polysulfide and the at least partially-cured protective shell comprises a polysulfide-based sealant detackifier.

6. The fastener of Claim 4, wherein the curable sealant material dose comprises a UV-curable sealant material in an uncured state and the at least partially-cured protective shell comprises the UV-curable sealant material in a partially-cured state; and optionally wherein the fastener further comprises a UV-curable sealant material/at least partially-UV-cured material protective shell interface (33).

7. The fastener of any preceding Claim, wherein the curable sealant material dose comprises an average thickness ranging from about 1/8 inch to about % inch.

8. The fastener of any preceding Claim, wherein the at least partially-cured protective shell comprises an average thickness ranging from about 1 mm to about 2 mm; and optionally wherein the at least partially-cured protective shell is configured to rupture at an applied pressure ranging from about 275 psi to about 400psi.

9. An aircraft pre-assembly (40) comprising:
a substrate (40c), said substrate comprising a plurality of components (40a, 40b), said
plurality of components configured to receive an installed fastener to join the plurality of components;
an installed curable sealant material-dosed fastener (36a) according to any preceding claim, said installed curable
sealant material-dosed fastener (36a) dimensioned to join the plurality of components, said
installed curable sealant material-dosed fastener comprising;
a ruptured at least partially-cured protective shell, said ruptured at least partially-cured protective shell configured to rupture simultaneously during installation of the installed curable sealant material-dosed fastener into the aircraft pre-assembly, said ruptured at least partially-cured protective shell comprising a first chemically-based composition;
a released curable sealant material dose, said released curable sealant material dose configured to be released from the ruptured at least partially-cured protective shell, said released curable sealant material dose comprising the first chemically-based composition.

10. The aircraft pre-assembly of Claim 9, wherein the ruptured at least partially-cured protective shell is configured to rupture during installation of the installed curable sealant material-dosed fastener at an applied pressure ranging from about 275 psi to about 400 psi.

11. The aircraft pre-assembly of Claim 9 or 10, wherein the curable sealant material comprises a polysulfide-based sealant material and the ruptured at least partially-cured protective shell comprises a polysulfide-based sealant detackifier; and/or wherein the curable sealant material comprises a first UV-curable sealant material in an uncured state and the ruptured at least partially-cured protective shell comprises a layer of the first UV-curable sealant material in an at least partially-cured state.

12. A method (100) for making a fastener for an aircraft assembly, the method (100) comprising:
applying (102) a curable sealant material dose to a fastener exterior region of a fastener;
forming (104) a curable sealant material-dosed fastener according to any of
claims 1 to 8, said curable sealant
material-dosed fastener comprising a curable sealant material-dosed fastener exterior region; and
forming (106) an at least partially-cured protective shell configured to encase the curable sealant material dose in the uncured state at the curable sealant material-dosed fastener exterior region.

13. The method (200) of Claim 12, further comprising coating (202) the curable sealant material-dosed fastener exterior region with a sealant detackifier material layer, said at least partially-cured protective shell comprising the sealant detackifier material layer.

14. The method (300) of Claim 12 or 13, wherein the curable sealant material dose comprises a UV-curable material.

15. The method (200) of Claim 14, wherein the curable sealant material dose comprises a polysulfide-based material and the detackifier material layer comprises a polysulfide-based material; and optionally the method further comprising
partially curing (402) a curable sealant material dose outer region of the UV curable material to form the at least partially-cured protective shell.
